# EUROPEAN PATENT APPLICATION

(11) **EP 3 848 419 A1**
(43) Date of publication of application: **14.07.2021**
(21) Application number: 19857422.0
(22) Date of filing: 04.09.2019
(51) Int. Cl.: C08L 101/00, C08L 23/26, C08L 77/00

(54) **THERMOPLASTIC RESIN COMPOSITION**

(30) Priority: 07.09.2018 JP 2018168358; 27.06.2019 JP 2019119866
(71) Applicant: Kuraray Co., Ltd., Kurashiki-shi, Okayama 710-0801 (JP)
(72) Inventor: OYA, Nobuhiro, Tsukuba-shi, Ibaraki 305-0841 (JP); KAMOSHIDA, Kensuke, Tokyo 100-8115 (JP); NANYA, Atsushi, Tsukuba-shi, Ibaraki 305-0841 (JP)
(74) Representative: Müller-Boré & Partner Patentanwälte PartG mbB
(86) International application number: PCT/JP2019/034819
(87) International publication number: WO 2020/050326

(57) **Abstract**

A thermoplastic resin composition containing 3 to 10 parts by mass of a modified polyolefin (B) having a melt flow rate (MFR) at a temperature of 240°C and under a load of 2.16 kg of 0.1 to 0.6 g/10 min, relative to 100 parts by mass of a thermoplastic resin (A) having a melting point of 270°C or higher therein. Preferably, the modified polyolefin (B) has a 1% decomposition temperature of 300 to 450°C. Preferably, the thermoplastic resin (A) is a polyamide resin.

## Description

### Technical Field

The present invention relates to a thermoplastic resin composition capable of producing a molded article having excellent slidability.

### Background Art

As excellent in heat resistance, mechanical characteristics, moldability, and the like, a thermoplastic resin is widely used as industrial components. For example, a polyamide resin is used for vehicle parts and others as excellent also in slidability in addition to the above-mentioned characteristics. In such use, severer service conditions such as increase in applied load to components are assumed as compared with service environments for general industrial components, and therefore improvement of slidability, heat resistance, mechanical characteristics, and the like is actively investigated.

Specifically, as a method for improving the slidability of a polyamide resin, a method of adding molybdenum disulfide, polyethylene, fluororesin or the like to a polyamide resin is proposed (PTLs 1, 2). Also proposed is a method of blending a specific amount of an acryl-modified polyorganosiloxane into a polyamide resin in which the carbon number per one amide resin in the recurring unit is 6 to 13 (PTL 3).

### Citation List

### Patent Literature

PTL 1: JP 62-185747 A
PTL 2: JP 1-247458 A
PTL 3: JP 2014-218574 A

### Summary of Invention

### Technical Problem

In the method described in PTL 1, the fluidity in molding lowers when molybdenum disulfide is blended into a polyamide resin, and the effect of improving slidability could not be said to be sufficient. In the method described in PTL 2, polyethylene and fluororesin are poorly miscible with polyamide, therefore causing some problems of poor appearance with peeling, flow marks, or the like on the surface of a molded article owing to bleed-out on the surface of a molded article, generation of mold contamination and the like. Further, PTL 3 discloses that a polyamide resin composition containing an acryl-modified organosiloxane is excellent in slidability, but there is a possibility that organosiloxane may cause electroconduction failure and there occurs a problem that the use of the materials to be contained is limited.

The present invention has been made in consideration of the above-mentioned, heretofore-existing problems, and an object thereof is to provide a thermoplastic resin composition capable of giving a molded article excellent in slidability especially under high surface pressure and also having heat resistance to heat such as friction heat, and also to provide a molded article using the thermoplastic resin composition.

### Solution to Problem

For solving the above-mentioned problems, the present inventors made assiduous studies and, as a result, have found that a molded article using a thermoplastic resin composition prepared by blending a thermoplastic resin having a high melting point and a modified polyolefin having a specific melt flow rate in a specific ratio is excellent in slidability especially under high surface pressure and also excellent in heat resistance, and on the basis of these findings, have further made investigations and have completed the present invention.

Specifically, the present invention provides the following [1] to [9].
[1] A thermoplastic resin composition containing from 3 to 10 parts by mass of a modified polyolefin (B) having a melt flow rate (MFR) at a temperature of 240°C and under a load of 2.16 kg of 0.1 to 0.6 g/10 min, relative to 100 parts by mass of a thermoplastic resin (A) having a melting point of 270°C or higher therein.
[2] The thermoplastic resin composition according to [1], wherein the modified polyolefin (B) has a 1% decomposition temperature of 300 to 450°C.
[3] The thermoplastic resin composition according to [1] or [2], wherein the thermoplastic resin (A) is a polyamide resin.
[4] The thermoplastic resin composition according to [3], wherein the polyamide resin is a semi-aromatic polyamide.
[5] The thermoplastic resin composition according to any of [1] to [4], wherein the modified polyolefin (B) is a modified polyethylene resin.
[6] The thermoplastic resin composition according to any of [1] to [5], wherein the content of an ethylene-derived structural unit contained in the modified polyolefin (B) is 50 mol% or more.
[7] The thermoplastic resin composition according to [3] or [4], wherein the polyamide resin has a weight-average molecular weight of 7,000 to 110,000.
[8] A molded article using the thermoplastic resin composition of any of [1] to [7].
[9] The molded article according to [8], wherein the molded article is a slide member.

### Advantageous Effects of Invention

According to the present invention, there can be provided a thermoplastic resin composition capable of giving a molded article excellent in slidability especially under high surface pressure and having heat resistance to heat such as friction heat, and a molded article using the thermoplastic resin composition.

### Description of Embodiments

### [Thermoplastic resin composition]

The thermoplastic resin composition of the present invention contains 3 to 10 parts by mass of a modified polyolefin (B) having a melt flow rate (MFR) at a temperature of 240°C and under a load of 2.16 kg of 0.1 to 0.6 g/10 min, relative to 100 parts by mass of a thermoplastic resin (A) having a melting point of 270°C or higher therein. In the present invention, a thermoplastic resin having a melting point of 270°C or higher is used, and therefore the heat resistance of a molded article using the thermoplastic resin composition improves. In addition, since a modified polyolefin having a specific melt flow rate is used, it is considered that the modified polyolefin can be finely dispersed in the phase of the thermoplastic resin, and the composition can exhibit lubricity as the modified polyolefin can be scraped little by little during friction, and can therefore exhibit excellent slidability.

### <Thermoplastic resin (A)>

In the present invention, a thermoplastic resin (A) having a melting point of 270°C or higher is used. When the melting point is 270°C or higher, the heat resistance of a molded article using the thermoplastic resin composition of the present invention improves. Accordingly, when the molded article is used as a slide member or the like, the molded article can be prevented from being melted by friction heat, etc. From this viewpoint, the melting point of the thermoplastic resin (A) is preferably 280°C or higher, more preferably 290°C or higher, even more preferably 295°C or higher, and is, in general, preferably 350°C or lower.

The melting point of the thermoplastic resin (A) in the present invention is a value measured according to the method described in the section of Examples.

The thermoplastic resin (A) for use in the present invention is not specifically limited as far as having a melting point of 270°C or higher, and includes a polyester resin, a fluororesin, a polyamide resin, and a polyether resin. Among these, from the viewpoint of improving the heat resistance and the mechanical characteristics of the molded article using the thermoplastic resin composition, a polyamide resin and a polyether resin are preferred, and a polyamide resin is more preferred.

### [Polyamide resin (A1)]

The polyamide resin (A1) for use in the present invention is not specifically limited as far as having a melting point of 270°C or higher, but is preferably a polyamide resin such that the carbon number per one amide group in the recurring unit of the polyamide resin is 6 to 13. When the carbon number per one amide group in the recurring unit of the polyamide resin falls within the range, the mechanical characteristics and the slidability of the molded article improve. From these viewpoints, the carbon number per one amide group in the recurring unit is preferably 7 to 13, more preferably 8 to 13.

"The carbon number per one amide group" is an average value of all carbons (including the carbon of the amide group) contained in each recurring unit per one amide group.

The polyamide resin (A1) for use in the present invention can be produced, for example, using main raw materials of an aminocarboxylic acid, a lactam, a diamine and a dicarboxylic acid.

Examples of the raw materials include an aminocarboxylic acid such as 6-aminocaproic acid, 11-aminoundecanoic acid, 12-aminododecanoic acid, and para-aminomethylbenzoic acid; a lactam such as ε-caprolactam, and ω-laurolactam; an aliphatic diamine such as 1,4-tetramethylenediamine, 1,5-pentamethylenediamine, 1,6-hexamethylene diamine, 2-methylpentamethylenediamine, 2,2,4-trimethyl-1,6-hexamethylenediamine, 2,4,4-trimethyl-1,6-hexamethylenediamine, 1,7-heptamethylenediamine, 1,8-octamethylenediamine, 1,9-nonamethylenediamine (1,9-nonanediamine), 2-methyl-1,8-octamethylenediamine, 2-ethyl-1,7-heptanediamine, 1,10-decamethylenediamine, 1,11-undecamethylenediamine, 1,12-dodecamethylenediamine, 1,13-tridecamethylenediamine, and 5-methyl-nonamethylenediamine; an alicyclic diamine such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine; an aromatic diamine such as metaxylylenediamine, and paraxylylenediamine; an aliphatic dicarboxylic acid such as oxalic acid, malonic acid, dimethylmalonic acid, succinic acid, glutaric acid, adipic acid, 2-methyladipic acid, pimellic acid, 2,2-dimethylglutaric acid, suberic acid, 2,2-diethylsuccinic acid, azelaic acid, sebacic acid, dodecanedioic acid, and dimer acid; an alicyclic dicarboxylic acid such as 1,3-cyclohexanedicarboxylic acid, and 1,4-cyclohexanedicarboxylic acid; and an aromatic dicarboxylic acid such as terephthalic acid, isophthalic acid, phthalic acid, 1,4-naphthalenedicarboxylic acid, 2,6-naphthalenedicarboxylic acid, 2,7-naphthalenedicarboxylic acid, 1,4-phenylenedioxy-diacetic acid, 1,3-phenylenedioxy-diacetic acid, diphenic acid, 4,4'-oxy-dibenzoic acid, diphenylmethane-4,4'-dicarboxylic acid, diphenylsulfone-4,4'-dicarboxylic acid, and 4,4'-biphenyldicarboxylic acid.

In the present invention, one alone or two or more kinds of homopolymers or copolymers derived from these raw materials can be used either singly or as combined.

Specific examples of the polyamide resin (A1) include polytetramethylene adipamide (nylon 46), polytetramethylene terephthalamide (nylon 4T), polyhexamethylene terephthalamide (nylon 6T), polytetramethylene terephthalamide/polyhexamethylene terephthalamide copolymer (nylon 6T/4T), polyhexamethylene adipamide/polyhexamethylene terephthalamide/polytetramethylene terephthalamide/polytetramethylene adipamide copolymer (nylon 66/6T/4T/46), polyhexamethylene terephthalamide/polycapramide copolymer (nylon 6T/6), polyhexamethylene terephthalamide/polyundecanamide copolymer (nylon 6T/11), polyhexamethylene terephthalamide/polydodecanamide copolymer (nylon 6T/12), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene adipamide/polyhexamethylene isophthalamide/polycapramide copolymer (nylon 66/6I/6), polyhexamethylene adipamide/polyhexamethylene terephthalamide/polyhexamethylene isophthalamide copolymer (nylon 66/6T/6I), polyhexamethylene terephthalamide/polyhexamethylene isophthalamide copolymer (nylon 6T/6I), polyhexamethylene terephthalamide/poly(2-methylpentamethylene) terephthalamide copolymer (nylon 6T/M5T), polynonamethylene terephthalamide (nylon 9T), poly(2-methyloctamethylene) terephthalamide (nylon M8T), polynonamethylene terephthalamide/poly(2-methyloctamethylene) terephthalamide copolymer (nylon 9T/M8T), polydecamethylene terephthalamide (nylon 10T), polyundecamethylene terephthalamide (nylon 11T), polydodecamethylene terephthalamide (nylon 12T), polypentamethylene terephthalamide/polydecamethylene terephthalamide copolymer (nylon 5T/10T), polydecamethylene terephthalamide/polyhexamethylene dodecanamide copolymer (nylon 10T/612), polydecamethylene terephthalamide/polyhexamethylene terephthalamide copolymer (nylon 10T/6T), polydecamethylene terephthalamide/polyhexamethylene adipamide copolymer (nylon 10T/66), polyhexamethylene adipamide/polyhexamethylene terephthalamide/polydecamethylene terephthalamide/polydecamethylenemethylene adipamide copolymer (nylon 66/6T/10T/106), polydecamethylene terephthalamide/polyundecanamide copolymer (nylon 10T/11), polynonamethylenenaphthalene dicarboxamide (nylon 9N), polynonamethylenenaphthalene dicarboxamide/poly(2-methyloctamethylene)naphthalene dicarboxamide copolymer (nylon 9N/M8N), polyhexamethylenecyclohexane dicarboxamide (nylon 6C), polyhexamethylenecyclohexane dicarboxamide/poly(2-methylpentamethylene)cyclohexane dicarboxamide copolymer (nylon 6C/M5C), polynonamethylenecyclohexane dicarboxamide (nylon 9C), poly(2-methylocatamethylene)cyclohexane dicarboxamide (nylon M8C), polynonamethylenecyclohexane dicarboxamide/poly(2-methyloctamethylene)cyclohexane dicarboxamide copolymer (nylon 9C/M8C), and mixtures and copolymers thereof.

Among these, from the viewpoint of improving the heat resistance of the molded article, polynonamethylene terephthalamide (nylon 9T), polynonamethylene terephthalamide/poly(2-methyloctamethylene) terephthalamide copolymer (nylon 9T/M8T), polydecamethylene terephthalamide (nylon 10T), polytetramethylene adipamide (nylon 46), polynonamethylenenaphthalane dicarboxamide (nylon 9N), polynonamethylenenaphthalene dicarboxamide/poly(2-methyloctamethylene)naphthalane dicarboxamide copolymer (nylon 9N/M8N), polynonamethylenecyclohexane dicarboxamide (nylon 9C), poly(2-methyloctamethylene)cyclohexane dicarboxamide (nylon M8C), and polynonamethylenecyclohexane dicarboxamide/poly(2-methyloctamethylene)cyclohexane dicarboxamide copolymer (nylon 9C/M8C) are preferred; and polynonamethylene terephthalamide (nylon 9T), polynonamethylene terephthalamide/poly(2-methyloctamethylene) terephthalamide copolymer (nylon 9T/M8T), polynonamethylenenaphthalane dicarboxamide/poly(2-methyloctamethylene)naphthalane dicarboxamide copolymer (nylon 9N/M8N) are more preferred.

The polyamide resin (A1) for use in the present invention is, from the viewpoint of improving the heat resistance and the high-temperature stiffness of molded article, preferably a semi-aromatic polyamide containing an aromatic ring in the recurring unit, and is, above all, more preferably a semi-aromatic polyamide using an aliphatic diamine and an aromatic dicarboxylic acids as starting materials.

The aliphatic diamine to constitute the semi-aromatic polyamide is, from the viewpoint of improving the heat resistance of the molded article, preferably an aliphatic diamine having 4 to 18 carbon atoms. As the aliphatic diamine to constitute the semi-aromatic polyamide, an aliphatic diamine having 4 to 18 carbon atoms and any other aliphatic diamine can be used as combined, and in the case, the content of the aliphatic diamine having 4 to 18 carbon atoms in the total amount of the aliphatic diamine is preferably 50 to 100 mol%, more preferably 60 to 100 mol%, even more preferably 75 to 100 mol%, especially more preferably 90 to 100 mol%.

As the aliphatic diamine having 4 to 18 carbon atoms, preferably at least one of 1,9-nonandiamine and 2-methyl-1,8-octanediamine is used, and more preferably both the two are used. In the case where 1,9-nonandiamine and 2-methyl-1,8-octanediamine are used as combined, the molar ratio of 1,9-nonandiamine/2-methyl-1,8-octanediamine is preferably 99/1 to 1/99, more preferably 95/5 to 50/50, even more preferably 90/10 to 75/25. When the molar ratio of 1,9-nonandiamine/2-methyl-1,8-octanediamine falls within the range, the heat resistance, the high-temperature stiffness, the dimensional stability and the moldability of the molded article improve.

The aromatic dicarboxylic acid to constitute the semi-aromatic polyamide is preferably terephthalic acid or naphthalene-dicarboxylic acid, more preferably terephthalic acid. The total content of terephthalic acid and naphthalene-dicarboxylic acid in the total amount of the aromatic dicarboxylic acid to constitute the semi-aromatic polyamide is preferably 50 to 100 mol%, more preferably 60 to 100 mol%, even more preferably 75 to 100 mol%, further more preferably 90 to 100 mol%. When the total content of terephthalic acid and naphthalene-dicarboxylic acid in the total amount of the aromatic dicarboxylic acid falls within the range, the heat resistance of the molded article improves.

The content of the aliphatic diamine having 4 to 18 carbon atoms in the total amount of the monomers to constitute the semi-aromatic polyamide is preferably 30 to 55 mol%, more preferably 40 to 55 mol%, and the content of the aromatic dicarboxylic acid is preferably 30 to 55 mol%, more preferably 40 to 55 mol%.

Preferably, the polyamide resin (A1) is sealed with a terminal-sealing agent at least partly at the terminal of the molecular chain thereof. When the terminal is sealed, the melt moldability of the resultant thermoplastic resin composition betters.

As the terminal-sealing agent to seal the terminal of the polyamide resin (A1), a monofunctional compound having reactivity with the terminal amino group or carboxy group of polyamide may be used, and from the viewpoint of reactivity and stability of sealed terminals, a monocarboxylic acid or a monoamine is preferred, and from the viewpoint of easy handleability, a monocarboxylic acid is more preferred. In addition, acid anhydrides, monoisocyanates, monoacid halides, monoesters and monoalcohols are also usable.

Examples of the monocarboxylic acid usable as a terminal-sealing agent include an aliphatic monocarboxylic acid such as acetic acid, propionic acid, butyric acid, valeric acid, caproic acid, caprylic acid, lauric acid, tridecanoic acid, myristic acid, palmitic acid, stearic acid, pivalic acid, and isobutyric acid; an alicyclic monocarboxylic acid such as cyclohexanecarboxylic acid; and an aromatic monocarboxylic acid such as benzoic acid, toluic acid, α-naphthalenecarboxylic acid, β-naphthalenecarboxylic acid, methylnaphthalene-carboxylic acid, and phenylacetic acid. One alone or two or more of these may be used either singly or as combined.

Among these, from the viewpoint of reactivity, stability of sealed terminals and production cost, preferred are acetic acid, propionic acid, butyric acid, valeric acid, caproic acid, caprylic acid, lauric acid, tridecanoic acid, myristic acid, palmitic acid, stearic acid and benzoic acid.

Examples of the monoamine usable as a terminal-sealing agent include an aliphatic monoamine such as methylamine, ethylamine, propylamine, butylamine, hexylamine, octylamine, decylamine, stearylamine, dimethylamine, diethylamine, dipropylamine, and dibutylamine; an alicyclic monoamine such as cyclohexylamine and dicyclohexylamine; and an aromatic monoamine such as aniline, toluidine, diphenylamine, and naphthylamine. One alone or two or more of these may be used either singly or as combined.

Among these, from the viewpoint of reactivity, boiling point, stability of sealed terminals and production cost, preferred are butylamine, hexylamine, octylamine, decylamine, stearylamine, cyclohexylamine and aniline.

The polyamide resin (A1) for use in the present invention can be produced according to a known method. Examples of usable methods include a melt polymerization method, a solid-phase polymerization method and a melt extrusion polymerization using an aminocarboxylic acid or a lactam, and a dicarboxylic acid and a diamine.

One example of a production method for the polyamide resin (A1) includes first mixing a dicarboxylic acid component to be a dicarboxylic acid unit, a diamine component to be a diamine unit, a catalyst and optionally a terminal-sealing agent each in a predetermined amount and all at a time, then heating them at 200 to 250°C to prepare a prepolymer, and further polymerizing the prepolymer through solid-phase polymerization or using a melt extruder.

In the case where the final stage of polymerization is carried out in a mode of solid-phase polymerization, preferably, the polymerization is carried out under reduced pressure or in an inert gas atmosphere, and in the case, when the polymerization temperature falls within a range of 200 to 280°C, the polymerization speed can be high, the productivity is excellent and discoloration or gelation can be effectively prevented. In the case where the final stage of polymerization is carried out using a melt extruder, the polymerization temperature is preferably 370°C or lower, and in the case, a polyamide resin (A1) can be obtained neither with little decomposition nor with degradation.

Examples of the catalyst usable in production of the polyamide resin (A1) include phosphoric acid, phosphorus acid, hypophosphorous acid, and salts or esters thereof.

The salts or esters include salts of phosphoric acid, phosphorous acid or hypophosphorous acid with a metal such as potassium, sodium, magnesium, vanadium, calcium, zinc, cobalt, manganese, tin, tungsten, germanium, titanium or antimony; ammonium salts of phosphoric acid, phosphorous acid or hypophosphorous acid; and ethyl esters, isopropyl esters, butyl esters, hexyl esters, isodecyl esters, octadecyl esters, decyl esters, stearyl esters and phenyl esters of phosphoric acid, phosphorous acid or hypophosphorous acid.

Preferably, the polyamide resin (A1) has a weight-average molecular weight, as measured in terms of standard polymethyl methacrylate through gel permeation chromatography (GPC), of 7,000 or more, more preferably 10,000 or more, even more preferably 12,000 or more. When the weight-average molecular weight is not less than the above-mentioned lower limit, the mechanical characteristics such as strength of the resultant molded articles improve. Also preferably, the weight-average molecular weight is 110,000 or less, more preferably 80,000 or less, even more preferably 40,000 or less. When the weight-average molecular weight is not more than the above-mentioned upper limit, the moldability and the heat resistance of the resultant molded articles improve.

### [Polyether resin (A2)]

Examples of a polyether resin (A2) usable as the thermoplastic resin in the present invention include polyphenylene ether (PPE), polyether sulfone (PES) having an ether group and a sulfone group mixedly, polyether ketone (PEK) having an ether group and a carbonyl group mixedly, polyether ether ketone (PEEK), polyether ketone ketone (PEKK), and polyphenylene sulfide (PPS) having a thioether group. Among these, from the viewpoint of improving the heat resistance and the mechanical characteristics of the molded article, polyphenylene sulfide and polyether ether ketone are preferred.

### [Content of thermoplastic resin (A) in thermoplastic resin composition]

The content of the thermoplastic resin (A) in the thermoplastic resin composition of the present invention is preferably 30 to 97% by mass. When the content of the thermoplastic resin (A) falls within the range, the heat resistance of the molded article can sufficiently improve and, in addition, the mechanical characteristics thereof also improve, and therefore the molded article can be favorably used as a slide member. From these viewpoints, the content of the thermoplastic resin (A) in the thermoplastic resin composition is preferably 40 to 97% by mass, more preferably 50 to 97% by mass, even more preferably 60 to 97% by mas, especially more preferably 80 to 97% by mass.

### <Modified polyolefin (B)>

In the present invention, a modified polyolefin (B) having a melt flow rate (MFR) at a temperature of 240°C and under a load of 2.16 kg of 0.1 to 0.6 g/10 min is used. Since the thermoplastic resin composition of the present invention contains the modified polyolefin (B), the slidability of the molded article using the thermoplastic resin composition improves. In the thermoplastic resin composition of the present invention, it is considered that the modified polyolefin (B) is easy to finely disperse in the thermoplastic resin (A) and the modified polyolefin (B) is scraped by friction to exhibit lubricity, and the slidability of the molded article can be thereby improved.

When MFR of the modified polyolefin (B) falls within the above range, the slidability of the molded article improves, and in addition, the miscibility and the affinity between the modified polyolefin (B) and the thermoplastic resin (A) also improve. From this viewpoint, the melt flow rate (MFR) at a temperature of 240°C and under a load of 2.16 kg of the modified polyolefin (B) is preferably 0.15 g/10 min or more, more preferably 0.20 g/10 min or more, even more preferably 0.25 g/10 min or more, and is also preferably 0.55 g/10 min or less, more preferably 0.50 g/10 min or less, even more preferably 0.45 g/10 min or less. The melt flow rate of the modified polyolefin (B) can be controlled, for example, by the molecular weight thereof, as well as the type and the amount of the modification and the presence or absence of introduction of crosslinking thereinto. For example, in general, by increasing the molecular weight, the melt flow rate value can be reduced.

The melt flow rate (MFR) at a temperature of 240°C and under a load of 2.16 kg of the modified polyolefin (B) in the present invention is a value measured according to the method described in the section of Examples.

The polyolefin to constitute the modified polyolefin (B) includes a polyethylene resin and a polypropylene resin, and above all, from the viewpoint of improving the slidability of the molded article, a polyethylene resin is preferred. Specifically, the modified polyolefin (B) for use in the present invention is preferably a modified polyethylene resin.

Examples of the polyethylene resin include a low-density polyethylene, a linear low-density polyethylene, a middle-density polyethylene, and a high-density polyethylene. A high-molecular weight polyethylene containing an ultra-high-molecular weight polyethylene component and a low-molecular weight polyethylene component is also usable.

The content of the ethylene-derived structural unit in the modified polyethylene (B) is preferably 50 mol% or more, more preferably 60 mol% or more, and the polyethylene may be a copolymer of ethylene and a monomer such as an α-olefin. Examples of the α-olefin include propylene, 1-butene, 1-hexene, 1-octene, and 4-methyl-1-pentene.

The modified polyolefin (B) includes one prepared by modifying a polyolefin such as the above-mentioned polyethylene resin with, for example, one or more selected from an unsaturated carboxylic acid and a derivative thereof, and a vinylic polymer.

The unsaturated carboxylic acid to be used for modification includes acrylic acid, methacrylic acid, maleic acid, fumaric acid, tetrahydrophthalic acid, itaconic acid, citraconic acid, crotonic acid, and endo-cis-bicyclo[2.2.1]hept-5-ene-2,3-dicarboxylic acid (nadic acid).

The unsaturated carboxylic acid derivative includes malenyl chloride, maleimide, acrylamide, methacrylamide, glycidyl methacrylate, maleic anhydride, citraconic anhydride, monomethyl maleate, dimethyl maleate, and glycidyl maleate. One alone or two or more of these may be used either singly or as combined.

Among these, an unsaturated dicarboxylic acid or an acid anhydride thereof is preferred, and maleic acid, nadic acid or an acid anhydride thereof is more preferred.

As a method for modifying a polyolefin such as a polyethylene resin with an unsaturated carboxylic acid or a derivative thereof, there is mentioned a method of graft-polymerizing a polyethylene resin with a grafting monomer selected from an unsaturated carboxylic acid or a derivative thereof.

The graft-polymerizing method is not specifically limited, and examples thereof include a method of melting a polyethylene resin and then adding a grafting monomer thereto for graft polymerization, and a method of dissolving a polyethylene resin in a solvent and then adding a grafting monomer thereto for graft polymerization. In graft polymerization, preferably a radical initiator is used concurrently.

The reaction ratio of the grafting monomer to the polyethylene resin is preferably 0.01 to 10 parts by mass relative to 100 parts by mass of the polyethylene resin.

Examples of the vinylic polymer for modifying a polyolefin include a polystyrene, a polymethyl methacrylate and an acrylonitrile-styrene copolymer.

As a method for modifying a polyethylene resin with a vinylic polymer, there is mentioned a method of adding a solution containing a vinyl monomer such as styrene, a radical polymerization initiator such as benzoyl peroxide, and an organic peroxide-containing vinyl monomer such as t-butylperoxymethacryloyloxyethyl carbonate to an aqueous suspension of a polyethylene resin to thereby infiltrate the radical polymerization initiator, the organic peroxide-containing vinyl monomer and the vinyl monomer into the polyethylene resin, and then polymerizing the vinyl monomer and the organic peroxide-containing vinyl monomer in the polyethylene resin to produce an organic peroxide group-containing vinylic polymer, and melt-kneading the resultant resin composition or a mixture prepared by adding a polyethylene resin to the resin composition to give a vinylic polymer-grafted polyethylene resin.

The content ratio of the vinylic polymer in the vinylic polymer-modified polyethylene resin is preferably 10 to 60% by mass.

Preferably, the modified polyolefin (B) for use in the present invention has a 1% decomposition temperature of 300 to 450°C. When the 1% decomposition temperature of the modified polyolefin (B) falls within the range, the modified polyolefin (B) can be readily kneaded with the thermoplastic resin (A) having a high melting point to give a molded article more excellent in heat resistance and slidability. On the other hand, when 1% decomposition temperature is lower than 300°C, gas may be generated owing to decomposition in melt-kneading and molding. From these viewpoints, the 1% decomposition temperature of the modified polyolefin (B) is preferably 340°C or higher, more preferably 350°C or higher, even more preferably 360°C or higher, and is preferably 440°C or lower, more preferably 430°C or lower, even more preferably 420°C or lower.

The 1% decomposition temperature of the modified polyolefin (B) in the present invention is a value measured according to the method described in the section of Examples.

The amount of the modified polyolefin (B) relative to 100 parts by mass of the thermoplastic resin (A) is 3 to 10 parts by mass. When the amount of the modified polyolefin (B) relative to 100 parts by mass of the thermoplastic resin (A) is less than 3 parts by mass, the friction coefficient of the slide member could not be sufficiently lowered and the wear volume may be large, but when the amount of the modified polyolefin (B) is more than 10 parts by mass, the mechanical strength of the molded article lowers. From these viewpoints, the amount of the modified polyolefin (B) relative to 100 parts by mass of the thermoplastic resin (A) is preferably 4 parts by mass or more, more preferably 5 parts by mass or more. When the amount of the modified polyolefin (B) falls within the above range, the tensile strength of the molded article increases. Also, especially from the viewpoint of the slidability of the resultant molded article, the amount of the modified polyolefin (B) may be 9 parts by mass or less, or may be 8 parts by mass or less, or further may be 7 parts by mass or less.

### <Filler (C)>

The thermoplastic resin composition of the present invention may optionally contain a filler (C). When the thermoplastic resin composition of the present invention contains a filler, the mechanical characteristics, the heat resistance and the dimensional characteristics of the molded article using the thermoplastic resin composition of the present invention can improve further more.

Examples of the filler (C) include a fibrous filler such as glass fibers, carbon fibers, wholly aromatic polyamide fibers (e.g., polyparaphenylene terephthalamide fibers, polymetaphenylene terephthalamide fibers, polyparaphenylene isophthalamide fibers, polymetaphenylene isophthalamide fibers, and fibers obtained from a condensate of diaminodiphenyl ether and terephthalic acid or isophthalic acid), boron fibers, liquid-crystal polyester fibers, and basalt fibers; an acicular filler such as potassium titanate whiskers, aluminum borate whiskers, calcium carbonate whiskers, wollastonite, and xonotlite; a powdery filler such as talc, calcium carbonate, silica, silica alumina, alumina, titanium dioxide, and molybdenum disulfide; and a flaky filler such as hydrotalcite, glass flakes, mica, clay, montmorillonite, and kaolin. One alone or two or more kinds of these may be used either singly or as combined.

Among these fillers, from the viewpoint of improving the mechanical characteristics, the heat resistance and the dimensional characteristics of the molded article, at least one or more selected from the following are preferred.
Fibrous filler: glass fibers, carbon fibers, wholly aromatic polyamide fibers.
Acicular filler: potassium titanate whiskers, aluminum borate whiskers, calcium carbonate whiskers, wollastonite, and xonotlite.
Powdery filler: talc, calcium carbonate, silica.
Flaky filler: glass flakes, mica, kaolin.

Preferably, the filler (C) is surface-treated. In the case where the filler (C) is surface-treated, the affinity thereof for the thermoplastic resin (A) can be improved and the mechanical characteristics of the thermoplastic resin composition can be better.

The surface-treating agent for surface-treating the filler (C) includes a coupling agent such as a silane coupling agent, a titanium coupling agent, and an aluminate coupling agent; and a sizing agent.

The coupling agent is preferably aminosilane, epoxysilane, methyltrimethoxysilane, methyltriethoxysilane, γ-glycidoxypropyltrimethoxysilane, vinyltriacetoxysilane, and vinyltrimethoxysilane.

The sizing agent is preferably an epoxy compound, an urethane compound, a carboxylic acid compound, an urethane/maleic acid-modified compound, and an urethane/amine-modified compound. One alone or two or more kinds of these surface treating agents may be used either singly or as combined.

In the case where the thermoplastic resin composition of the present invention contains a filler (C), the content thereof is preferably 10 to 200 parts by mass relative to 100 parts by mass of the thermoplastic resin (A), more preferably 15 to 150 parts by mass, even more preferably 20 to 100 parts by mass. When the content of the filler (C) falls within the above range, the strength of the molded article formed of the thermoplastic resin composition can be increased and, in addition, the workability of the thermoplastic resin composition also improves.

### <Other components>

The thermoplastic resin composition of the present invention can contain, as needed and within a range not detracting from the advantageous effects of the present invention, other components such as a crystal nucleating agent, a copper-based stabilizer, a hindered phenol-based antioxidant, a hindered amine-based antioxidant, a phosphorus-based antioxidant, a thio-based antioxidant, an amine-based antioxidant, a UV absorbent, a light stabilizer, an antistatic agent, an impact resistance improver, a plasticizer, a lubricant, a flame retardant, a flame retardation aid, a colorant, a pigment, an antistatic agent, and a fluidity improver. In addition, a solid lubricant such as polyolefin, PTFE, molybdenum disulfide, graphite, mica and talc can also be blended.

### <Production method for thermoplastic resin composition>

As a method for producing the thermoplastic resin composition of the present invention, preferably employed is a method capable of uniformly mixing the thermoplastic resin (A) and the modified polyolefin (B). Specifically, the composition can be produced using a kneading machine such as a single-screw extruder, a twin-screw extruder, a kneader, or a Banbury mixer. Regarding the melt-kneading condition for the method, for example, the components are kneaded at 300 to 350°C for 1 to 30 minutes to give the thermoplastic resin composition of the present invention. In this case, the thermoplastic resin composition prepared by melt-kneading can be directly molded to give a molded article, or can be once pelletized and then molded to give a molded article.

### [Molded article]

The molded article of the present invention uses the thermoplastic resin composition of the present invention, and for example, the thermoplastic resin composition of the present invention can be molded according to a known molding method of injection molding, extrusion molding, press forming, blow molding, calender molding or cast molding. For the molded article of the present invention, the thermoplastic resin composition of the present invention can be combined with any other compound.

The use of the molded article of the present invention is not specifically limited, and the molded article can be used in various applications typically for vehicles and electric and electronic components. The molded article of the present invention is excellent in both slide property and mechanical characteristics and is, in addition, also excellent in other characteristics such as heat resistance, chemical resistance, low water absorption, dimensional stability and appearance, and is therefore favorable as a slide member. Above all, the molded article is favorably used as bearings, bearing retainers, gears, bushes, cams, rails, rollers, pulleys, rotors, friction plates, valves, switches, levers, fasteners, lack guides, support yokes, belts, chains, chain tensioner guides, sealants, and connectors and breakers requiring slidability.

### Examples

Hereinunder the present invention is described more specifically with reference to Examples, but the present invention is not whatsoever restricted by these Examples. The physical properties of the compounds used in Examples and Comparative Examples are evaluated according to the following methods.

### <Melting point of thermoplastic resin (A)>

Using a differential scanning calorimeter (DSC), a thermoplastic resin (sample mass 10 mg) was heated in a nitrogen atmosphere in a DSC furnace, from 30°C to 340°C at a rate of 10°C/min, then kept at 340°C for 5 minutes, cooled down to 50°C at a rate of 10°C/min, and kept at 50°C for 5 minutes. And then, this was heated up to 340°C at a rate of 10°C/min, and the position of the endothermic peak appearing during the heating was read to be the melting point (°C) of the resin. When 2 or more endothermic peaks appear, the highest temperature side peak is the melting point (°C).

### <Melt flow rate of modified polyolefin (B)>

For the measurement, a melt indexer from Toyo Seiki Seisaku-sho, Ltd. (G-02, cylinder inner diameter 9.550 mm, piston head diameter 9.474 mm, die length 8.000 mm, die hole diameter 2.095 mm) was used. A die was positioned at the bottom of a cylinder. After the cylinder temperature reached 240°C, a modified polyolefin (B) was put into the cylinder with preventing inflow of air thereinto, and after the sample input, a piston was inserted into the cylinder and a load of 2.16 kg was applied thereto. In 4 minutes after the sample input, the measurement was started. The resin ejected through the die hole was sampled at intervals of a measurement time of 30 seconds, and the mass of the resultant sample was converted into a mass thereof in terms of a measurement time of 10 minutes to be a melt flow rate (MFR) of the modified polyolefin (B). A comparative polymer (X) was measured in the same manner.

### <1% Decomposition temperature of modified polyolefin (B)>

Using a thermogravimetric/differential scanning calorimetric analyzer (TG/DSC1) from METTLER TOLEDO Corporation, measurement was carried out in an air atmosphere at a heating rate of 10°C/min, and the temperature at which 1% weight reduction relative to the initial weight occurred was referred to as the 1% decomposition temperature of the modified polyolefin (B) analyzed. A comparative polymer (X) was measured in the same manner.

### <Weight-average molecular weight of thermoplastic resin (A)>

The weight-average molecular weight of a thermoplastic resin (A) was measured as a standard polymethyl methacrylate-equivalent molecular weight thereof through gel permeation chromatography (GPC). An HFIP solution prepared by dissolving 0.85 g of sodium trifluoroacetate in 1 kg of 1,1,1,3,3,3-hexafluoroisopropanol (HFIP) was used as an eluent. 1.5 mg, in terms of the resin therein, of a sample was weighed, and dissolved in 3 mL of the above eluent. The resultant sample was led to pass through a 0.4-µm membrane filter to prepare a test portion. The measurement conditions are as follows.

### (Measurement conditions)

Device: HLC-8320GPC (from Tosoh Corporation)
Column: Two columns of TSKgel Super HM-N (from Tosoh Corporation) were connected in series.
Eluent: 0.085% sodium trifluoroacetate/HFIP solution
Flow rate: 0.4 mL/min (reference column: 0.2 mL/min)
Sample injection amount: 10 µL
Column temperature: 40°C
Standard polymethyl methacrylate: Shodex Standard M-75 from Showa Denko K.K., Polymethyl Methacrylate molecular weight 1010, polymethyl methacrylate from Agilent Technology Corporation
Detector: UV (254 nm) detector

### <Production of molded article (test piece)>

From the thermoplastic resin composition (pellets) obtained in the following Examples and Comparative Examples, ISO multi-purpose test piece A-type dumbbells were produced to be test pieces for tensile strength evaluation, using an injection molding machine from Shibaura Machine Co., Ltd. (clamp capacity: 80 tons, screw diameter: 32 mm), and using a T-runner mold under the condition of a cylinder temperature higher by 10 to 30°C than the melting point and a mold temperature higher by 20 to 30°C than the glass transition temperature. In addition, from the ISO multi-purpose test piece A-type dumbbells, rectangular parallelepiped test pieces (dimension: length × width × thickness = 80 mm × 10 mm × 4 mm) were cut out to be test pieces for impact resistance evaluation. Additionally, as test pieces for slidability evaluation, flat plates (dimension: length × width × thickness = 80 mm × 80 mm × 3 mm) were produced.

### <Degradability >

In melt-kneading a thermoplastic resin (A) and a modified polyolefin (B) or a comparative polymer (X) according to the production method of Examples and Comparative Examples mentioned below, a case where little deposit adhered to the vacuum vent portion for collecting gaseous components was judged as "G: good" and a case where much deposit adhered thereto was judged as "B: bad" to evaluate the moldability of the resultant composition. The results are shown in Table 1.

### <Slidability>

Using a friction wear tester (from A & D Company, Limited), and under the conditions of a predetermined surface pressure of 20 kgf/cm² and at a slip peripheral velocity of 50 cm/sec, the flat test plate produced according to the above-mentioned method and a ring of a steel material S45C (sandpaper-finished) were kept in contact, and the flat plate was rotated for 100 minutes to measure a wear amount. The wear amount was calculated from the difference between the weight of the flat plate before the test and the weight of the flat plate after the test.

### <Tensile strength>

Using an autograph (from Shimadzu Corporation) according to ISO527-1, the test piece for tensile strength evaluation produced according to the above-mentioned method was pulled at 5 mm/min at 23°C to measure the tensile strength (tensile yield strength) thereof.

### <Impact resistance>

Using a Charpy impact tester (from Toyo Seiki Seisaku-sho, Ltd.) according to ISO179/1eA, the test piece for impact resistance evaluation produced according to the above-mentioned method was tested to measure the notched Charpy impact value at 23°C.

Compounds used in Examples and Comparative Examples were prepared as follows.

### <Polyamide A-1: polyamide 9T (carbon number per one amide group in recurring unit: 8.5)>

7783 g of 1,9-nonanediamine, 1946 g of 2-methyl-1,8-octanediamine (1,9-nonanediamine/2-methyl-1,8-octanediamine = 80/20 (molar ratio)), 10083 g of terephthalic acid, 187.7 g of benzoic acid, 20 g of sodium hypophosphite monohydrate and 5000 g of water were put into a reactor, and purged with nitrogen. The internal temperature was elevated up to 220°C taking 3 hours. At that time, the pressure in the autoclave increased up to 2 MPa. Subsequently for 4 hours, the reaction was continued while water vapor was gradually degassed and while the pressure was kept at 2 MPa. Next, the pressure was lowered down to 1.2 MPa taking 30 minutes to give a prepolymer. The prepolymer was ground, and dried at 120°C under reduced pressure for 12 hours. This was polymerized in a solid phase under the condition of 200°C and 13.3 Pa for 2 hours and then under the condition of 235°C and 13.3 Pa to give a polyamide 9T (PA9T) having a melting point of 300°C and a weight-average molecular weight of 23,000.

### <Polyamide A-2: polyamide 9N (carbon number per one amide group in recurring unit: 10.5)>

716 g of 1,9-nonanediamine, 6442 g of 2-methyl-1,8-octanediamine (1,9-nonanediamine/2-methyl-1,8-octanediamine = 10/90 (molar ratio)), 9602 g of 2,6-naphthalenedicarboxylic acid, 142.9 g of benzoic acid, 16.9 g of sodium hypophosphite monohydrate and 7300 g of water were put into an autoclave having an internal volume of 40 liters, and purged with nitrogen. The internal temperature was elevated up to 220°C taking 3 hours. At that time, the pressure inside the autoclave increased up to 2 MPa. Subsequently for 4 hours, the reaction was continued while water vapor was gradually degassed and while the pressure was kept at 2 MPa. Next, the pressure was lowered down to 1.2 MPa taking 30 minutes to give a prepolymer. The prepolymer was ground, and dried at 120°C under reduced pressure for 12 hours. This was polymerized in a solid phase under the condition of 230°C and 13 Pa for 10 hours to give a polyamide 9N (PA9N) having a melting point of 317°C and a weight-average molecular weight of 20,000.

### <Modified polyolefin (B)>

B-1: maleic anhydride-modified polyethylene (MFR: 0.3 g/10 min, 1% decomposition temperature: 387°C)

### <Comparative polymer (X)>

X-1: maleic anhydride-modified polyethylene (MFR: 123 g/10 min, 1% decomposition temperature: 281°C)

### <Examples 1 to 5, Comparative Examples 1 to 3>

The components shown in Table 1 were pre-mixed in the ratio shown in Table 1, then fed all at a time into a synchronous rotating twin-screw extruder ("TEM-26SS" from Shibaura Machine Co., Ltd.) via a feed throat thereof, and melt-kneaded at a cylinder temperature of 320°C for the case of polyamide 9T or at a cylinder temperature of 330°C for the case of polyamide 9N, then strand-like extruded out, cooled and cut into pellets of a thermoplastic resin composition. The resultant pellets were evaluated for various physical properties thereof. The results are shown in Table 1.

**Table 1**

| | | | Example | | | | | Comparative Example | | |
|---|---|---|---|---|---|---|---|---|---|---|
| | | | 1 | 2 | 3 | 4 | 5 | 1 | 2 | 3 |
| Composition (part by mass) | Thermoplastic Resin (A-1) (Polyamide 9T) | | 100 | 100 | 100 | 100 | - | 100 | 100 | 100 |
| | Thermoplastic Resin (A-2) (Polyamide 9N) | | - | - | - | - | 100 | - | - | - |
| | Modified Polyolefin (B-1) | | 3 | 5 | 7 | 10 | 7 | 1 | 12 | - |
| | Comparative Polyolefin (X-1) | | - | - | - | - | - | - | - | 5 |
| Evaluation | Degradability | | G | G | G | G | G | G | G | B |
| | Slidability | Wear Amount (mg) | 22 | 22 | 16 | 22 | 33 | unmeasurable | 43 | 100 |
| | Tensile Strength (MPa) | | 86 | 82 | 80 | 76 | 89 | 90 | 74 | 82 |
| | Notched Charpy Impact Resistance (kJ/m²) | | 7.9 | 8.4 | 9.1 | 10.5 | 8.6 | 6.3 | 8.1 | 5.7 |

As obvious from the results in Table 1, it is known that Examples 1 to 5 contain 3 to 10 parts by mass of the modified polyolefin (B-1) having a melt flow rate (MFR) at a temperature of 240°C and under a load of 2.16 kg of 0.3 g/10 min, relative to 100 parts by mass of the thermoplastic resin (A), and therefore the molded articles thereof have excellent slidability. In Comparative Example 1, the amount of the modified polyolefin (B-1) was small, and therefore the molded article melted owing to friction heat and the slidability thereof could not be evaluated.

In Comparative Example 2, the amount of the modified polyolefin (B-1) was large, and therefore the tensile strength lowered. In Comparative Example 3, it is known that, since a modified polyolefin having a large MFR was used, the moldability was bad and the slidability and the impact resistance were poor.

### Industrial Applicability

The molded article using the thermoplastic resin composition of the present invention is excellent in slidability especially under high surface pressure, and has heat resistance to heat such as friction heat, and is therefore favorable for gears, bearings, bearing retainers, chain tensioner guides and can be used for vehicles and electric and electronic components.

## Claims

1. A thermoplastic resin composition comprising from 3 to 10 parts by mass of a modified polyolefin (B) having a melt flow rate (MFR) at a temperature of 240°C and under a load of 2.16 kg of 0.1 to 0.6 g/10 min, relative to 100 parts by mass of a thermoplastic resin (A) having a melting point of 270°C or higher therein.

2. The thermoplastic resin composition according to claim 1, wherein the modified polyolefin (B) has a 1% decomposition temperature of 300 to 450°C.

3. The thermoplastic resin composition according to claim 1 or 2, wherein the thermoplastic resin (A) is a polyamide resin.

4. The thermoplastic resin composition according to claim 3, wherein the polyamide resin is a semi-aromatic polyamide.

5. The thermoplastic resin composition according to any of claims 1 to 4, wherein the modified polyolefin (B) is a modified polyethylene resin.

6. The thermoplastic resin composition according to any of claims 1 to 5, wherein the content of an ethylene-derived structural unit contained in the modified polyolefin (B) is 50 mol% or more.

7. The thermoplastic resin composition according to claim 3 or 4, wherein the polyamide resin has a weight-average molecular weight of 7,000 to 110,000.

8. A molded article using the thermoplastic resin composition of any of claims 1 to 7.

9. The molded article according to claim 8, wherein the molded article is a slide member.
